# EUROPÄISCHE PATENTANMELDUNG

(11) **EP 2 196 313 A2**
(43) Veröffentlichungstag der Anmeldung: **16.06.2010**
(21) Anmeldenummer: 09010638.6
(22) Anmeldetag: 19.08.2009
(51) Int. Cl.: B41F 13/42, B41F 33/00, G03B 11/00

(54) **Druckmaschine**

(30) Priorität: 24.10.2008 DE 202008014207 U
(71) Anmelder: BRÜDER NEUMEISTER GMBH, 77933 Lahr (DE)
(72) Erfinder: Bauernfeind, Michael, 79341 Kenzingen (DE)
(74) Vertreter: Maucher, Wolfgang

(57) **Zusammenfassung**

Bei einer Druckmaschine (1) für Mehrfarbendruck ist ein Abdeckstreifen (11) für die Optik (10) einer zur Überwachung der Übereinstimmung der Farbaufträge vorgesehenen Kamera (6) vorgesehen, durch welche die Optik (10) vor Verschmutzung durch Farbspritzer geschützt ist. Der Abdeckstreifen (11) ist auf eine Rolle (13) vorgehalten und wird an der Optik (10) vorbeigeführt und auf eine aufnehmenden Spule (14) aufgewickelt. Die Vorschubbewegung des Abdeckstreifens (11) an der Optik (10) vorbei kann durch den Verschmutzungsgrad des Abdeckstreifens (11), welcher mit der Kamera (6) und einer angeschlossenen Bildverarbeitung (17) ermittelt werden kann, oder durch Betriebsparameter bestimmt werden (Fig. 2).

## Beschreibung

Die Erfindung betrifft eine Druckmaschine für Mehrfarbendruck mit wenigstens einer Kamera zur Überwachung der Übereinstimmung der unterschiedlichen Farbaufträge, wobei die mittels einer Halterung in der Druckmaschine angeordnete Kamera eine durchsichtige Abdeckung ihrer Optik als Schutz gegen Verschmutzung oder Farbspritzer aufweist.

Derartige Druckmaschinen und insbesondere die dazugehörigen Kameras sind bekannt und werden beispielsweise bei der automatisierten Nachregelung der Positionierung der Druckwalzen auf dem zu bedruckenden Gut eingesetzt. Dabei ist die Kamera in der Regel in einem Bereich der Druckmaschine angeordnet, in welchem das bedruckte Gut, insbesondere Papier, und die darauf befindliche Farbe noch nicht getrocknet sind, sodass es zu Farbspritzern oder auch sonstigen Verschmutzungen der Optik der Kamera kommen kann, was deren Funktionsfähigkeit beeinträchtigt.

Bisher müssen deshalb derartige Kameras von Zeit zu Zeit gereinigt werden, und um dieses Erfordernis zu vermeiden, ist es bekannt geworden, die Optik der Kamera durch auswechselbare Glasscheiben abzudecken. Somit kann die Glasscheibe von Zeit zu Zeit gewechselt werden, wodurch eine längere Unterbrechung für einen Reinigungsvorgang vermieden wird. Zwar erfordert ein solcher Wechsel der auswechselbaren Glasscheibe eine Unterbrechung des Betriebs der Druckmaschine, die kürzer als die für eine vollständige Reinigung der Optik der Kamera notwendige Zeitdauer ist, jedoch stellt jede Unterbrechung eine unerwünschte Störung des Betriebsablaufs dar.

Es besteht deshalb die Aufgabe, eine Druckmaschine mit Kamera der eingangs genannten Art zu schaffen, bei welcher eine Unterbrechung des Druckbetriebes zur Beseitigung von auf der Abdeckung der Kameraoptik befindlichen Verschmutzungen vermieden wird.

Zur Lösung dieser Aufgabe ist vorgesehen, dass bei einer Druckmaschine der eingangs genannten Art die Abdeckung als Streifen aus einer durchsichtigen Folie ausgebildet ist, der längs seiner Erstreckungsrichtung bewegbar ist und dessen Breite mindestens der Breite der Optik bzw. des mit dieser erfassten Messfeldes der Kamera entspricht, dass ein Teil des Streifens im Strahlengang vor der Optik der Kamera angeordnet ist, und dass der im Strahlengang vor der Optik befindliche Teil des Streifens stetig oder von Zeit zu Zeit relativ zu der Kamera längs seiner Erstreckungsrichtung weiterbewegbar ist, wodurch ein verbrauchter Teil des Streifens aus dem Strahlengang der Optik und ein unverbrauchter Teil des Streifens in den Strahlengang der Optik bringbar ist.

Über eine nachgeschaltete Bildbearbeitungssoftware ist es möglich, sich auf einen Teilbereich im mit der Kamera erfassten Bild einzuschränken, indem beispielsweise Randbereiche des erfassten Bildes softwareseitig ausgeblendet werden. In diesem Fall ist es bereits ausreichend, wenn der Streifen den Bereich abdeckt, der dem weiterverarbeiten Teilbereich des erfassten Bildes und damit der Ausdehnung des Messfeldes der Kamera entspricht.

Auf diese Weise ist es möglich, mit einem sehr preiswerten Material, nämlich einer durchsichtigen Folie, die Optik der Kamera abzuschirmen und abhängig von einem gewissen Verschmutzungsgrad oder abhängig von weiteren Prozessgrößen oder durch eine voreingestellte stetige Weiterbewegung dafür zu sorgen, dass immer wieder eine ausreichend große Durchsichtigkeit dieser Abschirmung vorhanden ist. Somit entfällt die Notwendigkeit einer unmittelbaren Reinigung der Kameraoptik oder eines Auswechselns einer Abdeckscheibe von Zeit zu Zeit und damit die Notwendigkeit von Unterbrechungen.

Günstig ist es dabei, wenn der unverbrauchte Teil des Streifens auf einer Rolle vorgehalten ist, von welcher der Streifen im Strahlengang vor der Optik abrollbar ist. Auf diese Weise kann ein relativ langer Abdeckstreifen zur Verfügung gestellt werden, der entsprechend lange benutzt werden kann. Für eine einfache und zweckmäßige Handhabung beim Vorwärtsbewegen dieses Streifens an der Kamera vorbei kann der verbrauchte Teil des Streifens auf einer Spule oder Trommel aufwickelbar sein. Insbesondere kann die den verbrauchten Teil des Streifens aufnehmende Spule oder Trommel motorisch antreibbar sein. Somit kann der gesamte Vorgang automatisiert werden.

Insbesondere für einen Vorschub der Abdeckfolie oder des Abdeckstreifens von Zeit zu Zeit kann der motorische Antrieb der den verbrauchten Teil des Streifens aufnehmenden Spule oder Trommel eine Ansteuerung aufweisen.

Die Ansteuerung kann zur Auslösung der Betätigung des motorischen Antriebs in vorbestimmten Zeitintervallen und/oder nach Durchlauf einer vorbestimmten Menge bedruckten Guts eingerichtet sein, wobei die Zeitintervalle oder die vorbestimmte Menge bedruckten Guts so festgelegt sind, dass ein vorbestimmter, die Funktion der Kamera nicht beeinträchtigender Verschmutzungsgrad an der Folie nicht überschritten wird.

Alternativ oder zusätzlich kann ein Sensor ausgebildet sein, mit welchem der Verschmutzungsgrad des im Strahlengang vor der Optik befindlichen Teil des Streifens überwachbar ist, wobei die Ansteuerung zur Auslösung der Betätigung des motorischen Antriebs bei Erreichen eines vorbestimmten Verschmutzungsgrades eingerichtet ist. Hierdurch wird eine besonders gleichmäßige und materialsparende Verwendung des Streifens erreicht, und es wird die Beeinträchtigung der Funktion der Kamera durch Trübung der Abdeckfolie im Strahlengang vermieden.

Besonders günstig ist es dabei, wenn als Sensor die Bildauswertung der Kamera, insbesondere mittels CCD-Chip oder eines Detektorfeldes, dient. Diese Bildauswertung wird bereits für die Erkennung von Farbpositionsmarken oder allgemein der Überwachung der Übereinstimmung der unterschiedlichen Farbaufträge verwendet und kann daher mit geringem Aufwand auch für die Erkennung des Verschmutzungsgrades eingesetzt werden.

Zweckmäßig ist es dabei, wenn die den unverbrauchten Teil des Streifens vorhaltende Rolle an einer Halterung gelagert ist, die an der Kamera nahe der Optik angebracht werden kann, wobei die Drehachse der Rolle quer zur Vorschubrichtung des Streifens angeordnet ist. Vorzugsweise kann die Halterung lösbar angebracht werden, wodurch die Rolle zum Austausch leichter zugänglich ist.

Auch die den verbrauchten Teil des Streifens aufnehmende Spule oder Trommel kann mittels einer Halterung an der Kamera vorzugsweise lösbar anbringbar sein. Somit ist es für den Benutzer auch einfach, diese Rollen mitsamt den jeweiligen Spulen oder Trommeln nach dem Verbrauch der Folie auszutauschen oder gegebenenfalls nach einer neuen Bestückung mit einer frischen Folie wieder einzusetzen.

Besonders ökonomisch kann die Anordnung betrieben werden, wenn die den unverbrauchten Teil des Streifens vorhaltende Rolle auf einer Spule oder Trommel angeordnet ist, die nach Verbrauch des Streifens als die den verbrauchten Teil des nächsten Streifens aufnehmende Spule oder Trommel eingesetzt werden kann. Somit lässt sich die ursprüngliche Vorratsrolle nach dem Verbrauch eines Folienstreifens als Aufnahmerolle für den nächsten Folienstreifen verwenden.

Die Halterungen für die den unverbrauchten Teil des Streifens vorhaltende Rolle, also die Vorratsrolle, und für die den verbrauchten Teil des Streifens aufnehmende Spule oder Trommel, also die Aufnahmerolle, können miteinander verbunden sein, was dem Wechsel einer verbrauchten Folie noch mehr erleichtert. Dabei können die Rollen an dieser Halterung lösbar angebracht sein, um die ursprüngliche Vorratsrolle auch in diesem Falle als Aufnahmerolle verwenden zu können.

An der Kamera kann eine Führung ausgebildet sein, zu welcher eine Gegenführung der Halterungen für die den unverbrauchten Teil des Streifens vorhaltende Rolle und für die den verbrauchten Teil des Streifens aufnehmende Spule oder Trommel passt. Diese Führung kann insbesondere quer zur Vorschubrichtung des Streifens ausgerichtet sein. Durch die Paarung von Führung und Gegenführung können die als gemeinsames Bauteil oder getrennt ausgeführten Halterungen einfach aufgesteckt bzw. aufgeschoben werden, wodurch der zeitliche Aufwand für den Wechsel der Folienrollen entsprechend gering ist.

Beispielsweise kann als Führung wenigstens eine teilweise offene Aussparung, vorzugsweise zwei einander bezüglich des Strahlengangs der Optik gegenüberliegende und/oder parallel zueinander verlaufende Aussparungen, vorgesehen sein, in welche die Gegenführung der Halterungen einschiebbar ist. Somit passt die Führung zur Aufnahme der gemeinsamen Halterung für die Rollen, und es können die Rollen mit ihren Halterungen modulartig als Ganzes ausgewechselt werden.

Für eine weitestgehende Vermeidung von optischen Verzerrungen im Strahlengang, die durch den Streifen hervorgerufen werden könnten und welche die Überwachung der Übereinstimmung der unterschiedlichen Farbaufträge beeinträchtigen könnten, ist eine definierte Führung des Streifens bei Durchquerung des Strahlengangs der Optik vorteilhaft. Diese kann beispielsweise durch Führungselemente wie Rollen oder Gleitstifte oder Gleitkanten erreicht werden. Besonders einfach ist es jedoch, wenn der Streifen in Gebrauchsstellung in Berührung mit dem im Strahlengang der Optik vordersten Element der Optik, insbesondere einer Linse oder einer zur Kamera gehörenden Glasscheibe, ist. Insbesondere kann vorgesehen sein, dass der Streifen auf diesem Element flach aufliegt.

Dabei ist es besonders günstig, wenn der Streifen unter Spannung an der Optik der Kamera anliegt und bei der Weiterbewegung entlanggleitet. Dies kann beispielsweise dadurch erreicht werden, dass die im Strahlengang vordere Begrenzung der Optik im Strahlengang vor einer gedachten Tangentialebene angeordnet ist, welche an die den unverbrauchten Teil des Streifens vorhaltende Rolle und die den verbrauchten Teil des Streifens aufnehmende Spule oder Trommel angelegt ist.

In der Praxis ist dies zweckmäßigerweise dadurch erreicht, dass die Tangentialebene an den größten Durchmesser der den unverbrauchten Teil des Streifens vorhaltende Rolle und der den verbrauchten Teil des Streifens aufnehmende Spule oder Trommel angelegt ist.

Ein kompakter Aufbau ergibt sich, wenn der motorische Antrieb mit den Halterungen für die den unverbrauchten Teil des Streifens vorhaltende Rolle und für die den verbrauchten Teil des Streifens aufnehmende Spule oder Trommel verbunden ist.

Beispielsweise kann vorgesehen sein, dass mit den Halterungen elektrische Anschlussmittel für den motorischen Antrieb verbunden sind, dass an der Kamera elektrische Gegenanschlussmittel vorgesehen sind und dass beim Anbringen der Halterungen an der Kamera zwischen den elektrischen Anschlussmitteln und den elektrischen Gegenanschlussmitteln ein elektrischer Kontakt zum Betrieb des motorischen Antriebs hergestellt wird. Somit kann der motorische Antrieb durch vollständiges Einschieben der Gegenführung in die Führung an die Kamera elektrisch angeschlossen werden. Es ist somit ein selbsttätig funktionsfähiges Modul bereitgestellt, welches zur Bewirkung des Verschmutzungsschutzes an der Kamera angebracht und nach Verbrauch des Streifens ausgetauscht werden kann.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale des Ausführungsbeispiels untereinander und/oder mit den Merkmalen der Ansprüche und/oder durch Anwendung der beschriebenen Erfindung bei weiteren Druckmaschinentypen.

Es zeigt
- Fig. 1: eine schematische Ansicht einer Druckmaschine,
- Fig. 2: eine Detailansicht der Kamera aus Fig. 1 mit abgenommener Abdeckung und
- Fig. 3: eine Explosionsdarstellung des Einschubmoduls mit der Abdeckung aus Fig. 2.

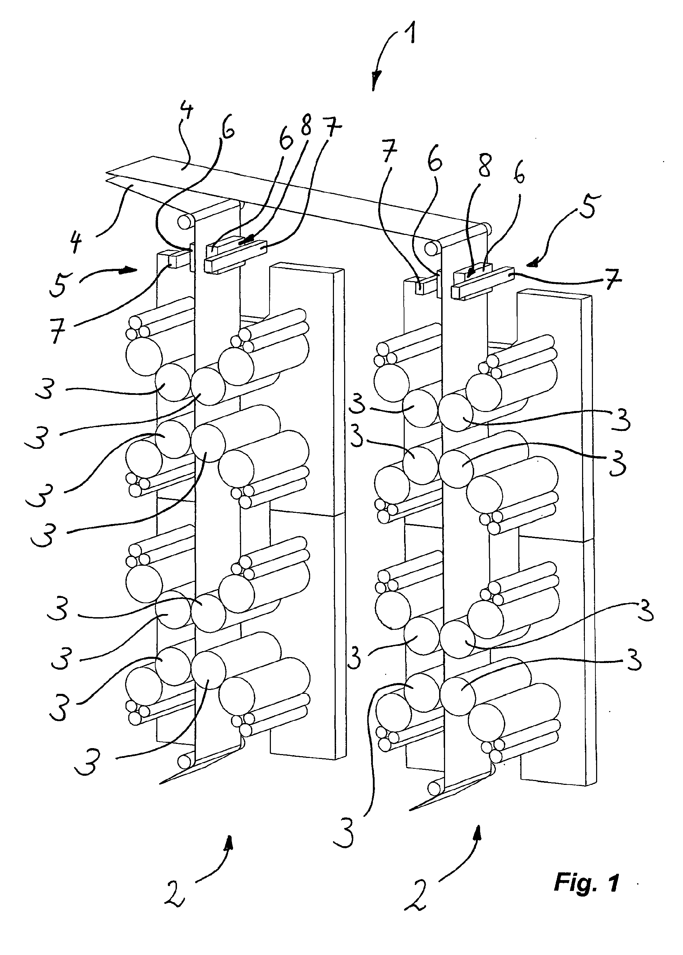

Die in der Fig. 1 schematische dargestellte und im Ganzen mit 1 bezeichnete Druckmaschine hat zwei Drucktürme 2, in denen jeweils acht Druckwalzen 3 für den beidseitigen Mehrfarbendruck auf eine als zu bedruckendes Gut vorgesehene Papierbahn 4 angeordnet sind.

Die Papierbahn 4 wird jeweils von unten nach oben durch die Drucktürme 2 geführt. Der Verlauf der Papierbahn 4 kann bei anderen Druckmaschinentypen von dem gezeigten Verlauf abweichen.

Am Austritt 5 der Papierbahnen 4 aus den Drucktürmen 2 sind Kameras 6 angeordnet, mit denen die Übereinstimmung der unterschiedlichen Farbaufträge auf den Papierbahnen 4 überwacht wird. Dies geschieht durch Erkennung und Auswertung von beispielsweise auf dem Rand der Papierbahnen aufgedruckten Farbmarken oder durch Auswertung des Druckbildes.

Jede der Kameras 6 ist zur Überwachung einer Seite einer Papierbahn 4 vorgesehen, wobei die zur Erfassung des Druckbildes oder der Farbmarken bestimmte, in Fig. 1 verdeckte Optik der Kameras 6 der jeweils überwachten Seite der Papierbahn zugewandt ist.

Die Kameras 6 sind mittels Halterungen 7 in der Druckmaschine 1 angeordnet, wobei die Halterungen 7 als quer zur Transportrichtung der Papierbahn 4 ausgerichtete Schienen ausgebildet sind und die Rückseiten 8 der Kameras 7 an diesen Schienen befestigt sind.

Nach dem Verlassen der Austritte 5 werden die Papierbahnen 4 der Weiterverarbeitung, insbesondere einem nicht weiter dargestellten Zuschnitt- und Falzwerk, zugeführt.

Die Überwachung der Übereinstimmung der unterschiedlichen Farbaufträge auf den Papierbahnen 4 wird zur Ansteuerung der Positionierung der Druckwalzen 3 verwendet, um so einen Mehrfarbendruck hoher Qualität zu erreichen.

Um eine Regelstrecke mit möglichst kurzen Reaktionszeiten zu bilden, muss jede Kamera 6 möglichst dicht hinter der in Transportrichtung der Papierbahnen 4 letzten Druckwalze 3 angeordnet sein. Dies hat zur Folge, das die Kamera 6 der Verschmutzung durch die noch nicht vollständig getrocknete Farbe ausgesetzt ist.

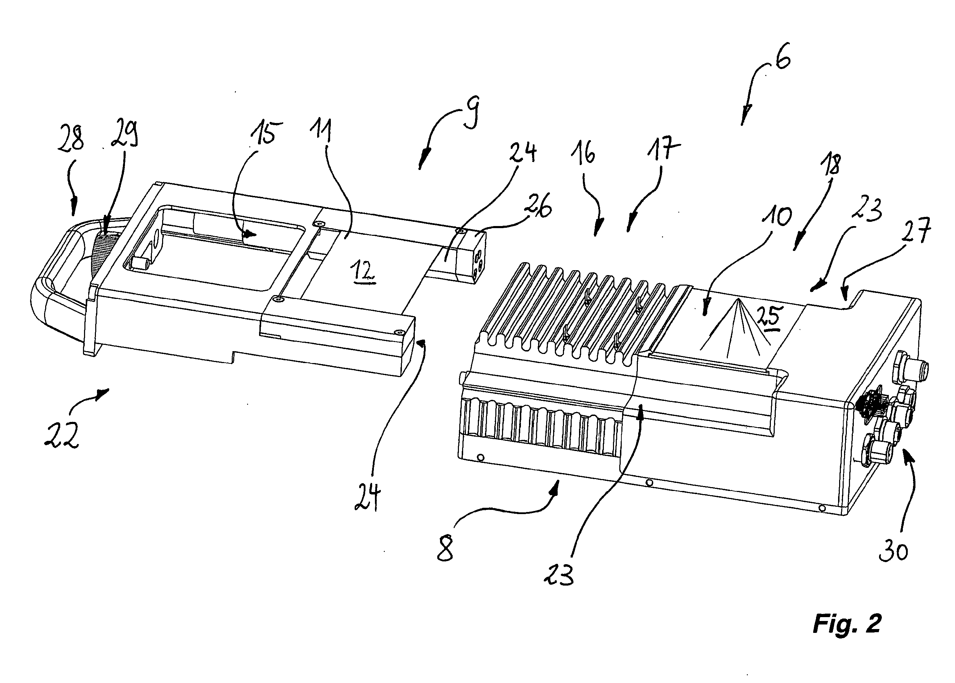

Zum Schutz vor diesen Farbspritzern und allgemein vor Verschmutzung weist die Kamera 6 eine Abdeckung 9 auf, die in Fig. 2 näher dargestellt ist.

Fig. 2 zeigt eine Kamera 6 in einer perspektivischen Ansicht, bei welcher die Rückseite 8 der Kamera 6 nach unten weisend angeordnet ist.

Die Abdeckung 9 ist als Streifen 11 aus einer durchsichtigen Folie, also als Abdeckstreifen, ausgebildet. Die Breite des Streifens 11 ist nicht kleiner als die Breite der Optik 10 bzw. des mit dieser erfassten Messfeldes der Kamera 6. Wird die Abdeckung 9 so an der Kamera 6 angeordnet, dass ein Teilabschnitt 12 des Streifens 11 die Optik 10 abdeckt, so ist die Optik 10 vor Verschmutzungen geschützt.

Dieser Streifen 11 lässt sich längs zu seiner Erstreckungsrichtung bewegen, wodurch ein verbrauchter, also mit Farbspritzern und/oder anderen Verschmutzungen belegter Teil des Streifens 11 aus dem Strahlengang der Optik 10 gebracht werden kann. Gleichzeitig gelangt dabei ein unverbrauchter, also noch keine Verschmutzungen aufweisender, Teil des Streifens 11 in den Strahlengang der Optik 10.

Dieser Vorgang vollzieht sich je nach Bedarf von Zeit zu Zeit oder stetig mit vorgegebener Vorschubgeschwindigkeit.

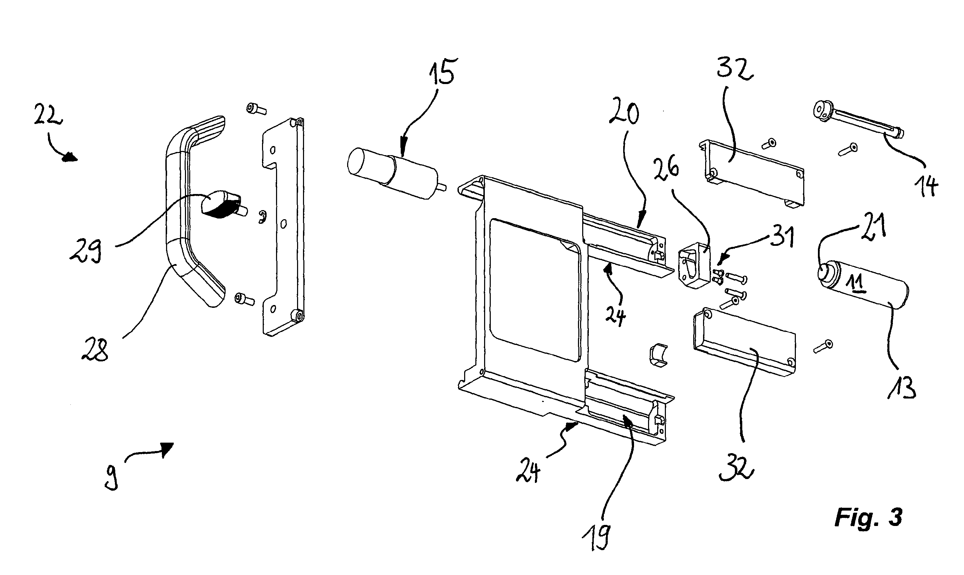

Der unverbrauchte Teil des Streifens 11 ist auf einer in Fig. 3 näher ersichtlichen Rolle 13 vorgehalten, von welcher er je nach Bedarf abgerollt und in den Strahlengang vor der Optik 10 gebracht werden kann.

Der verbrauchte Teil des Streifens 11 wird auf eine ebenfalls in Fig. 3 ersichtliche Spule 14 aufgewickelt.

Zur Ausführung des Vorschubs, also der Weiterbewegung, des Streifens 11 kann die Spule 14 motorisch angetrieben werden. Hierbei ist ein Ende des Streifens 11 an der Spule 14 fixiert, sodass die angetriebene Spule 14 den Streifen 11 aufwickelt.

Die Spule 14 wird durch einen elektrischen Antrieb 15 angetrieben. Hierzu ist in der Kamera 6 ein integrierter PC oder Rechner vorhanden, der unter anderem die Ansteuerung 16 der Betätigung des Antriebs 15 bereitstellt. Der integrierte PC, der für die Auswertung des mit der Optik 10 erfassten Druckbildes bzw. der Farbmarken eingerichtet ist, verfügt über eine zur Bildauswertung 17 eingerichtete Bildverarbeitung, die einen als Detektorfeld vorgesehenen CCD-Chip 18 in der Optik 10 ausliest und mit der Abweichungen im Druckbild bzw. bei den Farbmarken von einer Vorgabe anhand der ausgelesenen Daten erkannt werden können, und über eine Verarbeitungselektronik, mit welcher aus den erkannten Abweichungen Steuersignale für die Positionierung der Druckwalzen 3 in den Drucktürmen 2 relativ zu den Papierbahnen 4 generiert werden können.

Aus den vom CCD-Chip 18 ausgelesenen Daten kann auch die Verschmutzung des vor der Optik 10 befindlichen Teils 12 des Streifens 11 ermittelt werden. Somit ist ein Sensor zur Überwachung des Verschmutzungsgrads des Streifens 11 ausgebildet, und die Ansteuerung 16 kann den motorischen Antrieb 15 betätigen, wenn ein vorbestimmter Verschmutzungsgrad, bei dem eine unbeeinträchtigte Erfassung des Druckbildes bzw. der Farbmarken nicht mehr möglich ist, erreicht ist.

Wie in Fig. 3 ersichtlich ist, wird die den unverbrauchten Teil des Streifens 11 vorhaltende Rolle 13 zum Gebrauch in einer Halterung 19 drehbar gelagert. Diese Halterung 19 ist in Gebrauchsstellung der Abdeckung 9 nahe zur Optik 10 angeordnet und bewirkt eine Ausrichtung der Drehachse der Rolle 13 senkrecht zur Vorschubrichtung des Streifens 11 und parallel zu derjenigen gedachten Ebene, die durch den vor der Optik 10 angeordneten Teil 12 des Streifens 11 gegeben ist.

Der verbrauchte Teil des Streifens 11 wird auf die in Fig. 3 ersichtliche Spule 14 aufgewickelt. Diese Spule 14 ist in Gebrauchsstellung ebenfalls in einer Halterung 20 angeordnet und drehbar gelagert.

Die Rolle 13 ist auf eine Spule 21 aufgewickelt, die identisch zu der Spule 14 geformt ist und daher sowohl in die Halterung 19 als auch in die Halterung 20 eingesetzt werden kann. Nach vollständiger Abwicklung des unverbrauchten Streifens 11 von der Rolle 13 kann somit die Spule 21 in der Halterung 20 zur Aufnahme des verbrauchten Teils eines nächsten Streifens 11 verwendet werden.

Die Halterungen 19, 20 können jeweils durch Deckel 32 verschlossen werden, um den auf den Spulen 14, 21 aufgewikkelten Teil des Streifens 11 vor Verschmutzung zu schützen.

Die Halterung 19 ist mit der Halterung 20 verbunden. Beide Halterungen 19, 20 bilden somit Teile eines Einschubmoduls 22, welches die Abdeckung 9 trägt.

An der Kamera 6 sind zwei parallele Aussparungen 23 als Führung für das Einschubmodul 22 ausgebildet, in welche eine passende Gegenführung 24 eingeschoben werden kann, um das Einschubmodul 22 in Gebrauchsstellung, in der die Abdeckung 9 die Optik 10 abdeckt, zu bringen. Die Gegenführung 24 ist zweischenklig ausgebildet, wobei jeder Schenkel eine Halterung 19, 20 bildet und somit die Rolle 13 bzw. die Spule 14 aufnimmt.

Die Optik 10 der Kamera 6 ist durch eine Glasscheibe 25 abgeschlossen, welche das im Strahlengang der Optik 10 vorderste Element bildet. Der Strahlengang der Optik 10 verläuft von der Papierbahn 4 ausgehend zum CCD-Chip 18 der Kamera 6.

Der Teil 12 des Streifens 11, der die Abdeckung 9 der Optik 10 bildet, berührt die Glasscheibe 25 und liegt flach auf der Glasscheibe 25 auf. Dies wird dadurch erreicht, dass durch die Anordnung der Spulen 14, 21 in ihren Halterungen 20, 19 und die geometrischen Abmessungen der Schenkel der Gegenführung 24 und der Aussparungen 23 erreicht wird, dass die durch die Außenseite der Glassscheibe 25 definierte, gedachte Ebene eine Tangentialebene an den größten Durchmesser der den unverbrauchten Teil des Streifens 11 vorhaltenden Rolle 13, also den Durchmesser der voll bewickelten Spule 21, und an den größten Durchmesser der den verbrauchten Teil des Streifens 11 aufnehmenden Spule 14, also den Durchmesser der voll bewickelten Spule 14, ist.

Somit wird der Streifen 11 an die Glasscheibe 25 gedrückt und liegt unter Spannung an dieser an, wenn durch gegenläufige Beaufschlagung der Spulen 14 und 21 der Streifen 11 auf Zug belastet wird. Diese Beaufschlagung wird durch eine. Hemmung der Drehbewegung der Spule 21 und durch den motorischen Antrieb 15 für die Spule 14 erreicht. Der Streifen 11 gleitet dann bei seiner Weiterbewegung oder seinem Vorschub an der Glasscheibe 25 entlang.

An dem Einschubmodul 22 ist auch der motorische Antrieb 15 angeordnet, sodass der Antrieb 15 mit den Halterungen 19, 20 verbunden und mit diesen durch Einschieben der Gegenführung 24 in die Aussparungen 23 in Gebrauchsstellung gebraucht werden kann.

An einem Schenkel der Gegenführung 24 ist ein elektrisches Anschlussmittel 26 mit in Fig. 3 ersichtlichen elektrischen Kontaktstiften 31 angeordnet, welches beim Einschieben in die Aussparung 23 mit einem in einer Aussparung 23 angeordneten elektrischen Gegenanschlussmittels 27 in Wirkverbindung gebracht werden kann. Hierdurch wird die elektrische Verbindung des motorischen Antriebs 15 mit der Ansteuerung 16 hergestellt.

Zum erleichterten Entfernen und Anbringen des Einschubmoduls 22 weist dieses einen Handgriff 28 auf. Eine drehbare Verriegelung 29 verhindert ein unbeabsichtigtes Lösen des Einschubmoduls 22 aus seiner Gebrauchsstellung. Die durch die Aussparungen 23 und die Gegenführung 24 vorgegebene Einschubrichtung des Einschubmoduls 22 ist parallel zur der Erstreckungsrichtung der Halterungen 7 in Fig. 1 ausgerichtet.

An der in Bezug auf die Einschubrichtung des Einschubmoduls 22 rückwärtigen Seite sind an der Kamera 6 Anschlüsse 30 für den Austausch von Daten und die Versorgung der Kamera 6 mit elektrischer Energie angeordnet.

Bei der Druckmaschine 1 für Mehrfarbendruck ist ein Abdeckstreifen 11 für die Optik 10 einer zur Überwachung der Übereinstimmung der Farbaufträge vorgesehenen Kamera 6 vorgesehen, durch welche die Optik 10 vor Verschmutzung durch Farbspritzer geschützt ist. Der Abdeckstreifen 11 ist auf eine Rolle 13 vorgehalten und wird an der Optik 10 vorbeigeführt und auf eine aufnehmenden Spule 14 aufgewickelt. Die Vorschubbewegung des Abdeckstreifens 11 an der Optik 10 vorbei kann durch den Verschmutzungsgrad des Abdeckstreifens 11, welcher mit der Kamera 6 und einer angeschlossenen Bildverarbeitung 17 ermittelt werden kann, oder durch Betriebsparameter bestimmt werden.

## Patentansprüche

1. Druckmaschine für Mehrfarbendruck mit wenigstens einer Kamera (6) zur Überwachung der Übereinstimmung der unterschiedlichen Farbaufträge, wobei die mittels einer Halterung (7) in der Druckmaschine (1) angeordnete Kamera (7) eine durchsichtige Abdeckung (9) ihrer Optik (10) als Schutz gegen Verschmutzung oder Farbspritzer aufweist, **dadurch gekennzeichnet, dass** die Abdeckung (9) als Streifen (11) aus einer durchsichtigen Folie ausgebildet ist, der längs seiner Erstreckungsrichtung bewegbar ist und dessen Breite mindestens der Breite der Optik (10) bzw. des mit dieser erfassten Messfeldes der Kamera (6) entspricht, dass ein Teil (11) des Streifens (11) im Strahlengang vor der Optik (10) der Kamera (6) angeordnet ist, und dass der im Strahlengang vor der Optik befindliche Teil (12) des Streifens (11) stetig oder von Zeit zu Zeit relativ zu der Kamera (6) längs seiner Erstreckungsrichtung weiterbewegbar ist, wodurch ein verbrauchter Teil des Streifens (11) aus dem Strahlengang der Optik und ein unverbrauchter Teil des Streifens in den Strahlengang der Optik bringbar ist.

2. Druckmaschine nach Anspruch 1, **dadurch gekennzeichnet, dass** der unverbrauchte Teil des Streifens (11) auf einer Rolle (13) vorgehalten ist, von welcher der Streifen (11) im Strahlengang vor der Optik (10) abrollbar ist.

3. Druckmaschine nach Anspruch 1 oder 2, **dadurch gekennzeichnet, dass** der verbrauchte Teil des Streifens (11) auf einer Spule (14) oder Trommel aufwickelbar ist.

4. Druckmaschine nach einem der Ansprüche 1 bis 3, **dadurch gekennzeichnet, dass** die den verbrauchten Teil des Streifens (11) aufnehmende Spule (14) oder Trommel motorisch antreibbar ist.

5. Druckmaschine nach einem der Ansprüche 1 bis 4, **dadurch gekennzeichnet, dass** der motorische Antrieb (15) der den verbrauchten Teil des Streifens (11) aufnehmenden Spule (14) oder Trommel eine Ansteuerung (16) aufweist.

6. Druckmaschine nach einem der Ansprüche 1 bis 5, **dadurch gekennzeichnet, dass** die Ansteuerung (16) zur Auslösung der Betätigung des motorischen Antriebs (15) in vorbestimmten Zeitintervallen und/oder nach Durchlauf einer vorbestimmten Menge bedruckten Guts (4) eingerichtet ist.

7. Druckmaschine nach einem der Ansprüche 1 bis 6, **dadurch gekennzeichnet, dass** ein Sensor ausgebildet ist, mit welchem der Verschmutzungsgrad des im Strahlengang vor der Optik (10) befindlichen Teils (12) des Streifens (11) überwachbar ist, und dass die Ansteuerung (16) zur Auslösung der Betätigung des motorischen Antriebs bei Erreichen eines vorbestimmten Verschmutzungsgrades eingerichtet ist.

8. Druckmaschine nach einem der Ansprüche 1 bis 7, **dadurch gekennzeichnet, dass** als Sensor die Bildauswertung (17) der Kamera (6), insbesondere mittels CCD-Chip (18), dient.

9. Druckmaschine nach einem der Ansprüche 1 bis 8, **dadurch gekennzeichnet, dass** den unverbrauchten Teil des Streifens (11) vorhaltende Rolle (13) an einer Halterung (19) gelagert ist, die an der Kamera (6) nahe der Optik (10) vorzugsweise lösbar anbringbar ist, wobei die Drehachse der Rolle (13) quer zur Vorschubrichtung des Streifens (11) angeordnet ist.

10. Druckmaschine nach einem der Ansprüche 1 bis 9, **dadurch gekennzeichnet, dass** die den verbrauchten Teil des Streifens (11) aufnehmende Spule (14) oder Trommel mittels einer Halterung (20) an der Kamera (6) vorzugsweise lösbar anbringbar ist.

11. Druckmaschine nach einem der Ansprüche 1 bis 10, **dadurch gekennzeichnet, dass** die den unverbrauchten Teil des Streifens (11) vorhaltende Rolle (13) auf einer Spule (21) oder Trommel angeordnet ist, die nach Verbrauch des Streifens (11) als die den verbrauchten Teil des nächsten Streifens (11) aufnehmende Spule (14) oder Trommel einsetzbar ist.

12. Druckmaschine nach einem der Ansprüche 1 bis 11, **dadurch gekennzeichnet, dass** die den unverbrauchten Teil des Streifens (11) vorhaltende Rolle (13) und die den verbrauchten Teil des Streifens (11) aufnehmende Spule (14) oder Trommel an ihren jeweiligen Halterungen (19, 20) lösbar angebracht sind.

13. Druckmaschine nach einem der Ansprüche 1 bis 12, **dadurch gekennzeichnet, dass** die Halterungen (19, 20) für die den unverbrauchten Teil des Streifens (11) vorhaltende Rolle (13) und für die den verbrauchten Teil des Streifens (11) aufnehmende Spule (14) oder Trommel miteinander verbunden sind.

14. Druckmaschine nach einem der Ansprüche 1 bis 13, **dadurch gekennzeichnet, dass** an der Kamera (6) eine insbesondere quer zur Vorschubrichtung des Streifens (11) ausgerichtete Führung (23) ausgebildet ist, zu welcher eine Gegenführung (24) der Halterungen (19, 20) für die den unverbrauchten Teil des Streifens (11) vorhaltende Rolle (13) und für die den verbrauchten Teil des Streifens (11) aufnehmende Spule (14) oder Trommel passt.

15. Druckmaschine nach einem der Ansprüche 1 bis 14, **dadurch gekennzeichnet, dass** die an der Kamera (6) ausgebildete Führung (23) wenigstens eine teilweise offene Aussparung, vorzugsweise zwei einander bezüglich des Strahlengangs der Optik gegenüberliegende und/oder parallel zueinander verlaufende Aussparungen, hat, in welche die Gegenführung (24) der Halterungen (19, 20) einschiebbar ist.

16. Druckmaschine nach einem der Ansprüche 1 bis 15, **dadurch gekennzeichnet, dass** der Streifen (11) in Gebrauchsstellung in Berührung mit dem im Strahlengang der Optik vordersten Element (25) der Optik (10), insbesondere einer Linse oder einer zur Kamera (6) gehörenden Glasscheibe, ist, insbesondere auf diesem Element (25) flach aufliegt.

17. Druckmaschine nach einem der Ansprüche 1 bis 16, **dadurch gekennzeichnet, dass** der Streifen (11) unter Spannung an der Optik (10) der Kamera (6) anliegt und bei der Weiterbewegung entlanggleitet.

18. Druckmaschine nach einem der Ansprüche 1 bis 17, **dadurch gekennzeichnet, dass** das Element (25) oder die im Strahlengang vordere Begrenzung der Optik (6) im Strahlengang vor einer gedachten Tangentialebene angeordnet ist, welche an die den unverbrauchten Teil des Streifens (11) vorhaltende Rolle (13) und die den verbrauchten Teil des Streifens (11) aufnehmende Spule (14) oder Trommel angelegt ist.

19. Druckmaschine nach einem der Ansprüche 1 bis 18, **dadurch gekennzeichnet, dass** die Tangentialebene an den größten Durchmesser der den unverbrauchten Teil des Streifens (11) vorhaltende Rolle (13) und der den verbrauchten Teil des Streifens (11) aufnehmende Spule (14) oder Trommel angelegt ist.

20. Druckmaschine nach einem der Ansprüche 1 bis 19, **dadurch gekennzeichnet, dass** der motorische Antrieb (15) mit den Halterungen (19, 20) für die den unverbrauchten Teil des Streifens (11) vorhaltende Rolle (13) und für die den verbrauchten Teil des Streifens (11) aufnehmende Spule (14) oder Trommel verbunden ist.

21. Druckmaschine nach einem der Ansprüche 1 bis 20, **dadurch gekennzeichnet, dass** mit den Halterungen (19, 20) elektrische Anschlussmittel (26) für den motorischen Antrieb (15) verbunden sind, dass an der Kamera (6) elektrische Gegenanschlussmittel (27) vorgesehen sind und dass in Gebrauchsstellung der Halterungen (19, 20) an der Kamera (6) zwischen den elektrischen Anschlussmitteln (26) und den elektrischen Gegenanschlussmitteln (27) ein elektrischer Kontakt zum Betrieb des motorischen Antriebs (15) hergestellt ist.
